(19) **Europäisches Patentamt**

**European Patent Office**

**Office européen des brevets**

(11) **EP 1 230 742 B1**

(12) **EUROPÄISCHE PATENTSCHRIFT**

(45) Veröffentlichungstag und Bekanntmachung des Hinweises auf die Patenterteilung:
**03.11.2004 Patentblatt 2004/45**

(21) Anmeldenummer: **00982926.8**

(22) Anmeldetag: **26.09.2000**

(51) Int Cl.$^7$: **H04B 1/707**

(86) Internationale Anmeldenummer:
**PCT/DE2000/003342**

(87) Internationale Veröffentlichungsnummer:
**WO 2001/035542 (17.05.2001 Gazette 2001/20)**

(54) **VERFAHREN ZUR KORRELATION VON ZEITDISKRETEN SIGNALABSCHNITTEN**

METHOD FOR CORRELATING CHRONOLOGICALLY DISCRETE SIGNAL SEGMENTS

PROCEDE DE CORRELATION DE SECTIONS DE SIGNAUX A VALEURS DISCRETES EN TEMPS

(84) Benannte Vertragsstaaten:
**DE IT SE**

(30) Priorität: **10.11.1999 DE 19953895**

(43) Veröffentlichungstag der Anmeldung:
**14.08.2002 Patentblatt 2002/33**

(73) Patentinhaber: **ROBERT BOSCH GMBH**
**70442 Stuttgart (DE)**

(72) Erfinder: **BENTHIN, Marcus**
**31139 Hildesheim (DE)**

(56) Entgegenhaltungen:
**EP-A- 0 565 506        EP-A- 0 676 874**

**Beschreibung**

STAND DER TECHNIK

Die vorliegende Erfindung betrifft ein Verfahren zur Korrelation von zeitdiskreten Signalabschnitten, wobei ein vorbestimmter Signalabschnitt in einem Signal durch die Korrelation ermittelt wird, insbesondere für ein Signalübertragungssystem, wobei das Signal mit dem bekannten Signalabschnitt von einem Sender zu einem Empfänger gesendet wird und die Lage des bekannten Signalabschnitts im Signal im Emfänger durch die Korrelation zwischen dem empfangenen Signal und dem bekannten Signalabschnitt ermittelt wird.

Obwohl auf beliebige digitale Nachrichtenübertragungssysteme anwendbar, werden die vorliegende Erfindung sowie die ihr zugrundeliegende Problematik in bezug auf UMTS (Universal Mobile Telephone Systems)-Systeme erläutert.

Zur Detektion eines bekannten Signalabschnitts (im folgenden auch Testsignal genannt) in einem Empfangssignal wird üblicherweise im Empfänger die Korrelation des bekannten und dort gespeicherten Testsignals mit dem Empfangssignal durchgeführt.

Diese Lageermittlung des Testsignals dient z.B. zur Ermittlung des Anfangszeitpunktes des Testsignals innerhalb des Empfangssignals, d.h. zu Synchronisationszwecken.

Von besonderem Interesse sind hierbei Testsignale, die gute Autokorrelationseigenschaften haben, welche sich durch einen hohen Autokorrelationskoeffizienten bei der relativen Zeitverschiebung Null und außerdem durch niedrige Werte für die Autokorrelation zu Zeitverschiebungen ungleich Null auszeichnen.

Darüberhinaus sollten diese Testsignale einen systematischen Aufbau haben, der es ermöglicht die nötigen Korrelationen mit möglichst wenig Rechenoperationen durchzuführen. Eine besondere Klasse von zeitdiskreten Testsignalen in diesem Sinne bilden sogenannte hierarchische Codes oder Sequenzen.

Eine hierarchische Sequenz $h(k)$ $n$-ter Ordnung wird aus $n$ nicht notwendig verschiedenen kurzen Sequenzen

$$\underline{h}_1 = (h_1(0), h_1(1),..., h_1(m_1 -1)), \underline{h}_2 = (h_2(0), h_2(1),..., h_2(m_2 -1)),$$

$$...., \underline{h}_n = (h_n(0), h_n(1),..., h_n(m_n-1))$$

mit Elementen $h_i(k) \in \{-1,+1\}$ systematisch gemäß dem folgenden Konstruktionsschema aufgebaut:

$$x_1(k) = h_1(k), k=0,...,m_1-1 , \tag{1}$$

$$x_{i+1}(k) = h_{i+1}(k \text{ div } m_{i+1}) \cdot x_i(k \text{ mod } m_i),$$
$$k = 0, \ldots, \left(\prod_{l=1}^{i+1} m_l\right) - 1, \quad i = 1, \ldots, n-1 \tag{2}$$

$$h(k) = x_n(k), \quad k = 0, \ldots, \left(\prod_{l=1}^{n} m_l\right) - 1 \quad . \tag{3}$$

Der Aufwand für die Korrelation einer solchen hierarchischen Sequenz mit einem anderen Signal bzw. einer anderen Sequenz, läßt sich bekanntermaßen durch eine schnelle Korrelation in mehreren Stufen, im Vergleich zu einer direkten Realisierung, erheblich reduzieren. Zudem lassen sich hierarchische Sequenzen finden, die gute Korrelationseigenschaften haben und sich somit gut im eingangs erwähnten Sinne als Testsignale zur Synchronisation eignen.

Das erwähnte Verfahren zur aufwandseffizienten schnellen hierarchischen Korrelation soll im folgenden weiter erläutert werden, da das später beschriebene erfindungsgemäße Verfahren hierauf aufbaut. Das empfangene Signal mit dem das Testsignal im Empfänger korreliert werden soll, werde mit s(k) bezeichnet. Ohne Einschränkung der Allgemeinheit genügt es, hierarchische Sequenzen 2. Ordnung (d.h. $n$=2) zu betrachten, denn hierarchische Sequenzen mit mehr als zwei Hierarchiestufen werden gemäß den obigen Gleichungen sukzessive jeweils aus zwei Teilsequenzen aufgebaut. Die Korrelation soll für jeden Zeitpunkt $k$ durchgeführt werden.

Für das Korrelationsergebnis $v(k)$ ergibt sich dabei:

$$v(k) \quad = \quad \sum_{j=0}^{n-1} h(j) \cdot s(j+k) \quad = \quad \sum_{j=0}^{n-1} h_2(j \text{ div } m_2) \cdot h_1(j \text{ mod } m_1) \cdot s(k+j) \qquad (4)$$

$$= \quad \sum_{i=0}^{m_2-1} h_2(i) \cdot \underbrace{\sum_{j=0}^{n_1-1} h_1(j) \cdot s(k+i \cdot n_1 + j)}_{v_1(k+i \cdot n_1) :=} \quad = \quad \sum_{i=0}^{m_2-1} h_2(i) \cdot \sum_{j=0}^{n_1-1} v_1(k+i \cdot n_1) \qquad (5)$$

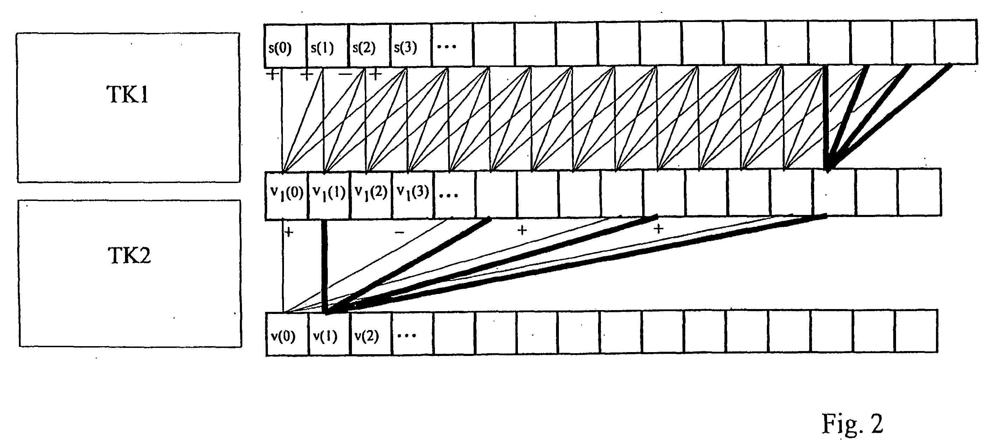

Fig. 2 illustriert den bekannten hierarchischen Korrelationsvorgang am Beispiel einer hierarchischen Sequenz 2. Ordnung, wobei die Rechenschritte durch Striche veranschaulicht sind.

Die kurzen Teilsequenzen seien durch $\underline{h}_1$=(+1, +1; -1, +1) und $\underline{h}_2$=(+1, -1, +1, +1) gegeben. Die Gesamtsequenz lautet damit $\underline{h}$=(+1, +1, -1, +1, -1,-1,+1,-1, +1,+1,-1,+1, +1,+1,-1,+1). Im ersten Schritt bzw. der ersten Teilkorrelationsstufe TK1 wird die Teilkorrelation $v_1(k)$ ermittelt. Im zweiten Schritt bzw. der zweiten Teilkorrelationsstufe TK2 wird aus diesem Zwischenergebnis die gesuchte Korrelation $v(k)$ bestimmt. Dabei kann mit fortschreitender Zeit k, wie in Fig. 2 durch die fetten Linien angedeutet, jeweils auf drei bekannte Ergebnisse zurückgegriffen werden und es muß nur eine Neuberechnung in der Teilkorrelationsstufe TK1 durchgeführt werden, nämlich für die jüngsten durch die Abtastung erhaltenen Signalwerte des Signals s(k).

Für $n>2$ Teilsequenzen ergeben sich entsprechend weitere Korrelationsstufen nach dem gleichen Grundprinzip.

Die der vorliegenden Erfindung zugrundeliegende Problematik besteht allgemein darin, daß das bekannte Verfahren auf nicht hierarchische Sequenzen erweitert werden soll, ohne daß der Rechenaufwand für die Korrelation zu groß wird.

VORTEILE DER ERFINDUNG

Die der vorliegenden Erfindung gemäß Anspruch 1 zugrundeliegende Idee besteht darin, daß es den bekannten schnellen mehrstufigen Korrelationsvorgang für hierarchische Sequenzen auf gestört hierarchische Sequenzen erweitert.

Als gestört hierarchische Sequenz $\underline{\tilde{h}}$ soll eine Sequenz bezeichnet werden, deren Aufbau nicht unmittelbar durch die Zerlegung in geeignete Teilsequenzen möglich ist, es sich aber eine hierarchische Sequenzen $\underline{h}$ finden läßt, die der Sequenz sehr ähnlich ist. Der Unterschied zwischen $\underline{h}$ und $\underline{\tilde{h}}$ wird durch eine weitere, im folgenden als Fehlersequenz $\underline{h}_e$ bezeichnete, Sequenz beschrieben. Die Zerlegung von $\underline{\tilde{h}}$ in $\underline{h}$ und $\underline{h}_e$ sollte so gewählt werden, daß die nötige Anzahl von Rechenoperationen für die Korrelation insgesamt möglichst stark reduziert wird.

Beim erfindungsgemäßen Verfahren werden also zur Berechnung der Korrelation $v(k)$ neben einer hierarchischen Korrelation noch Korrekturausdrücke berücksichtigt. Deshalb soll das erfindungsgemäße Verfahren als "korrigierte hierarchische Korrelation" bezeichnet werden.

Das erfindungsgemäße Verfahren der korrigierten hierarchischen Korrelation ist auf Sequenzen anwendbar, die sich selbst nicht direkt hierarchisch zerlegen lassen, für die sich aber eine geeignete Darstellung als Summe einer hierarchischen Sequenz und einer Fehlersequenz finden läßt.

Die weiter unten im Ausführungsbeispiel vorgestellte Sequenz ist als Teilsequenz zur Erzeugung einer hierarchischen Sequenz für das Universal Mobile Telecommunication System (UMTS) zu Synchronisationszwecken anwendbar. Das erfindungsgemäße Verfahren erlaubt nun die weitere Zerlegung dieser Teilsequenz gemäß einer korrigiert hierarchischen Struktur, so daß der nötige Rechenaufwand zur Bestimmung der Korrelation um weitere ca. 40% gesenkt werden kann. Da der numerische Aufwand für die Synchronisation einer Mobilstation auf eine Basisstation insgesamt einen signifikanten Anteil der Basisbandrechenleistung in der Mobilstation ausmacht, ist das erfindungsgemäße Verfahren von großem Nutzen zur Reduzierung der erforderlichen Rechenleistung.

Eine reduzierte Rechenleistung in der Basisbandsignalverarbeitung bedeutet zum einen geringere Kosten für die Basisband-Hardware (geringere Taktrate, weniger Gatter etc.). Zum anderen führt eine geringere Rechenleistung i.a. auch zu einer verringerten Leistungsaufnahme der Basisband-Hardware, so daß insbesondere für Mobilstationen, welche mit Akkus betrieben werden, verlängerte Sprech- oder Standby Zeiten ermöglicht werden können.

In den Unteransprüchen finden sich vorteilhafte Weiterbildungen und Verbesserungen des in Anspruch 1 angegebenen Verfahrens.

Gemäß einer bevorzugten Weiterbildung ist die gestört hierarchische Sequenz $\tilde{\underline{h}}$ folgendermaßen durch die hierarchische Sequenz $\underline{h}$ und die Fehlersequenz $\underline{h}_e$ darstellbar:

$$\widetilde{h}(k) = h(k) + h_e(k), \quad k = 0, \ldots, m-1 \tag{6}$$

wobei m eine natürliche Zahl ist und die Länge der Sequenzen $\tilde{\underline{h}}$, $\underline{h}$ und $\underline{h}_e$ bezeichnet und wobei die Elemente der Sequenzen $\tilde{\underline{h}}$ und $\underline{h}$ aus dem Wertevorrat {-1,+1} und die Elemente von $\underline{h}_e$ sind aus dem Wertevorrat {-2, 0, +2} sind.

Gemäß einer weiteren bevorzugten Weiterbildung wird die Korrelation $v(k)$ von $\tilde{\underline{h}}$ mit dem Signal $s(k)$ beschrieben durch:

$$v(k) = \sum_{j=0}^{m-1} \widetilde{h}(j) \cdot s(k+j) = \sum_{j=0}^{m-1} [h(j) + h_e(j)] \cdot s(k+j) \tag{7}$$

$$= \underbrace{\sum_{j=0}^{m-1} h(j) \cdot s(k+j)}_{u(k) :=} + \underbrace{\sum_{j=0}^{m-1} h_e(j) \cdot s(k+j)}_{u_e(k) :=} \tag{8}$$

wobei $u(k)$ die Korrelation zwischen dem Signal $s(k)$ und der abgelegten hierarchischen Sequenz ist und $u_e(k)$ die Korrelation zwischen dem Signal $s(k)$ und der abgelegten Fehlersequenz ist.

Der erste Summand $u(k)$ läßt sich aufgrund der hierarchischen Konstruktion von $\underline{h}$ direkt mit der schnellen hierarchischen Korrelation berechnen. Für den zweiten Summanden $u_e(k)$ hängt das weitere Vorgehen von der Struktur von $\underline{h}_e$ ab.

Gemäß einer weiteren bevorzugten Weiterbildung wird die Zerlegung in die Summe einer hierarchischen Sequenz und einer Fehlersequenz derart vorgenommen, daß die Fehlersequenz möglichst wenig von Null verschiedene Elemente enthält. Zweckmäßig ist eine Zerlegung von $\tilde{\underline{h}}$ in $\underline{h}$ und $\underline{h}_e$, derart, daß $\underline{h}_e$ möglichst wenig von Null verschiedene Elemente enthält.

Für den Fall, daß $\underline{h}_e$ z.B. nur ein einziges von Null verschiedenes Element, $h_e(K) = \beta$, enthält ($\beta \in$ {-2,+2}), vereinfacht sich die Berechnung von $u_e(k)$ zu $u_e(k)=\beta \cdot s(k+K)$, so daß folgt:

$$v(k) = u(k) + \beta \cdot s(k+K) \tag{9}$$

Bei mehr als einem von Null verschiedenen Element sind entsprechend mehr Korrekturterme zu berücksichtigen. Im allgemeinen Fall kann zur Berechnung des Ausdruckes $u_e(k)$ auch wieder ein Verfahren zur Berechnung von Korrelationsausdrücken verwendet werden.

Gemäß einer weiteren bevorzugten Weiterbildung wird das Verfahren in einem mobilen Telefonsystem angewendet.

ZEICHNUNGEN

Ein Ausführungsbeispiel der Erfindung ist in den Zeichnungen dargestellt und in der nachfolgenden Beschreibung näher erläutert.

Es zeigen:

Fig. 1    einen gestörten hierarchischen Korrelationsvorgang mit einer hierarchischen Sequenz 2. Ordnung und einer einfachen Fehlersequenz als Ausführungsbeispiel der vorliegenden Erfindung; und

Fig. 2    den bekannten hierarchischen Korrelationsvorgang am Beispiel einer hierarchischen Sequenz 2. Ordnung.

BESCHREIBUNG DER AUSFÜHRUNGSBEISPIELE

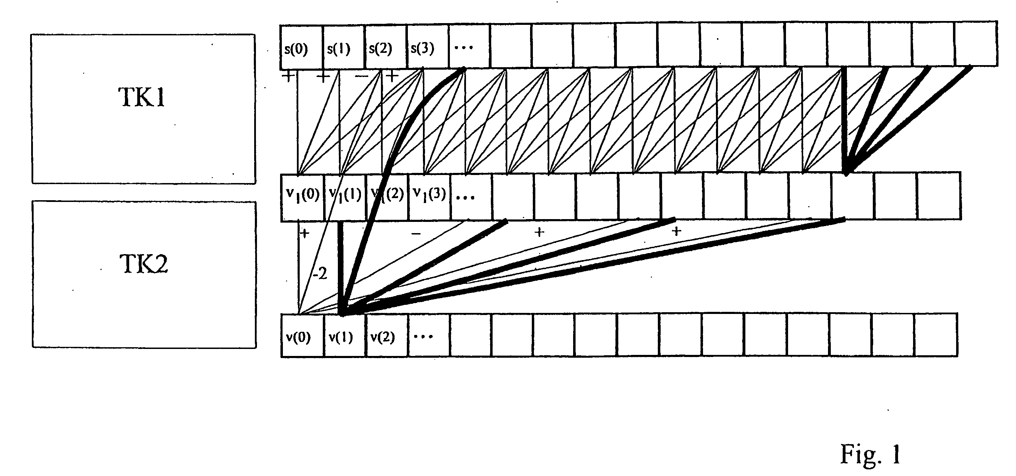

Im folgenden wird mit Bezug auf Fig. 1 eine Ausführungsform des erfindungsgemäßen Verfahrens entsprechend einem gestörten hierarchischen Korrelationsvorgang mit einer hierarchischen Sequenz 2. Ordnung und einer einfachen Fehlersequenz erläutert.

Die im Ausführungsbeispiel vorgestellte Sequenz ist als Teilsequenz zur Erzeugung einer hierarchischen Sequenz für das Universal Mobile Telecommunication System (UMTS) zu Synchronisationszwecken vorgeschlagen worden.

Betrachtet wird die folgende Lindner-Sequenz (vgl. auch H.D. Lüke, *Korrelationssignale,* Springer Verlag, Berlin, Heidelberg, New York, 1992):

$$\tilde{\underline{h}} = ( +1, +1, -1, -1, \quad -1, -1, +1, -1, \quad +1, +1, -1, +1, \quad +1, +1, -1, +1 ),$$

die sich offensichtlich nicht direkt in geeignete hierarchische Teilsequenzen zerlegen läßt, um die bekannte aufwandsgünstige hierarchische Korrelation anwenden zu können. Alternativ kann sie jedoch durch eine hierarchische Sequenz und eine Fehlersequenz gemäß

$$\tilde{h}(k) = \quad h(k) + h_e(k), \quad k = 0, \dots, m - 1 \qquad\qquad (10)$$

mit $\underline{h}$ = (+1,+1,-1,+1, -1,-1,+1,-1, +1,+1,-1,+1, +1,+1,-1,+1) und
$\quad \underline{h}_e$ = ( 0, 0, 0, - 2, 0, 0, 0, 0, 0, 0, 0, 0, 0, 0, 0, 0)
dargestellt werden.

Eine hierarchische Zerlegung von $\underline{h}$ ist durch die Teilsequenzen $\underline{h}_1$=(+1,+1,-1,+1) und $\underline{h}_2$ = (+1,-1,+1,+1) gegeben.

Der Korrelationsvorgang insgesamt kann damit vorteilhafterweise mit dem erfindungsgemäßen Verfahren mit Hilfe der korrigierten hierarchischen Korrelation erfolgen.

Fig. 1 illustriert diesen Vorgang. Zusätzlich zu der aus Fig. 2 bekannten Struktur der hierarchischen Korrelation sind Verbindungen vom Empfangssignal $s(k)$ zum Ergebnis der zweiten Teilkorrelationsstufe TK2 zu sehen, welche die Korrekturterme in Form von mit -2 gewichteten Werten des Eingangssignals repräsentieren.

Nachstehend erfolgt' eine Betrachtung des Aufwands für die gesamte Korrelation. Eine direkte Realisierung der Korrelation der Sequenz $\tilde{\underline{h}}$ (der Länge $m$ Elemente) mit einer i.a. komplexwertigen Sequenz $s(k)$ benötigt für jeden zu ermittelnden Korrelationswert $v(k)$ eine Anzahl von $m$ komplexen Additionen. Mit $m$ =16 sind das in diesem Beispiel eben 16 komplexe Additionen.

Durch Aufteilung in die hierarchische Sequenz und die Fehlersequenz reduziert sich diese Anzahl signifikant. Für die hierarchische Korrelation werden in der ersten Stufe 4 und in der zweiten Stufe ebenfalls 4 komplexe Additionen pro Korrelationswert $v(k)$ benötigt. Hinzu kommt die Multiplikation des Wertes $s(k+3)$ mit dem Faktor -2 und die Addition dieses Korrekturwertes zum Ergebnis der hierarchischen Korrelation, wie Fig. 1 entnehmbar. Berücksichtigt man, daß die Multiplikation mit 2 einer Bitverschiebung um eine Stelle entspricht und somit einen vernachlässigbar geringen Rechenaufwand gegenüber einer "echten" Multiplikation erfordert, verbleibt merklich nur die eine zusätzliche komplexe Addition um den Korrekturwert in das Korrelationsergebnis einzubeziehen. Der gesamte Korrelationsvorgang benötigt mit Hilfe der korrigierten hierarchischen Korrelation somit 9 komplexe Additionen pro Korrelationswert $v(k)$ gegenüber den oben erwähnten 16 komplexen Additionen bei direkter Realisierung der Korrelation. Dies bedeutet eine Ersparnis von gut 40%.

Das vorgestellte Verfahren hat eine sehr hohe Aktualität mit Hinblick auf die gegenwärtigen, weltweiten, intensiven Forschungs- und Entwicklungsaktivitäten aller Hersteller von Mobilfunkgeräten im Zusammenhang von Mobilfunksystemen der dritten Generation (UMTS usw.).

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Insbesondere ist die Erfindung nicht auf UMTS (Universal Mobile Telephone Systems)-Systeme beschränkt, sondern auf beliebige digitale zeitdiskrete Signalverarbeitsysteme anwendbar.

**Patentansprüche**

1. Verfahren zur Korrelation von zeitdiskreten Signalabschnitten, wobei ein vorbestimmter Signalabschnitt in einem Signal durch die Korrelation ermittelt wird, insbesondere für ein Signalübertragungssystem, wobei das Signal mit dem bekannten Signalabschnitt von einem Sender zu einem Empfänger gesendet wird und die Lage des bekannten Signalabschnitts im Signal im Emfänger durch die Korrelation zwischen dem empfangenen Signal und dem bekannten Signalabschnitt ermittelt wird,
   **dadurch gekennzeichnet, daß**
   .der bekannte Signalabschnitt als gestört hierarchische Sequenz abgelegt wird, welche die Summe einer hierarchischen Sequenz und einer Fehlersequenz ist; und
   die Korrelation als Summe einer Korrelation zwischen dem empfangenen Signal und der abgelegten hierarchischen Sequenz und einer Korrelation zwischen dem Signal und der abgelegten Fehlersequenz gebildet wird.

2. Verfahren nach Anspruch 1, **dadurch gekennzeichnet, daß** die gestört hierarchische Sequenz $\tilde{\underline{h}}$ folgendermaßen durch die hierarchische Sequenz $\underline{h}$ und die Fehlersequenz $\underline{h}_e$ darstellbar ist:

$$\widetilde{h}(k) = h(k) + h_e(k), \quad k = 0, \dots, m-1$$

wobei $m$ eine natürliche Zahl ist und die Länge der Sequenzen $\tilde{\underline{h}}$, $\underline{h}$ und $\underline{h}_e$ bezeichnet und wobei die Elemente der Sequenzen $\tilde{\underline{h}}$ und $\underline{h}$ aus dem Wertevorrat {-$\alpha$,+$\alpha$} und die Elemente von $\underline{h}_e$ aus dem Wertevorrat {-2$\alpha$, 0, +2$\alpha$} sind. $\alpha$ repräsentiert hierbei eine beliebige reelle oder komplexe Zahl.

3. Verfahren nach Anspruch 2, **dadurch gekennzeichnet, daß** die Korrelation $v(k)$ von $\tilde{\underline{h}}$ mit dem Signal $s(k)$ beschrieben wird durch:

$$v(k) = \sum_{j=0}^{m-1} \widetilde{h}(j) \cdot s(k+j) = \sum_{j=0}^{m-1} [\, h(j) + h_e(j)\,] \cdot s(k+j)$$

$$= \underbrace{\sum_{j=0}^{m-1} h(j) \cdot s(k+j)}_{u(k) :=} + \underbrace{\sum_{j=0}^{m-1} h_e(j) \cdot s(k+j)}_{u_e(k) :=}$$

wobei $u(k)$ die Korrelation zwischen dem Signal $s(k)$ und der abgelegten hierarchischen Sequenz ist und $u_e(k)$ die Korrelation zwischen dem Signal $s(k)$ und der abgelegten Fehlersequenz ist.

4. Verfahren nach Anspruch 1, 2 oder 3, **dadurch gekennzeichnet, daß** die Zerlegung in die Summe einer hierarchischen Sequenz und einer Fehlersequenz derart vorgenommen wird, daß die Fehlersequenz möglichst wenig von Null verschiedene Elemente enthält.

5. Verfahren nach einem der vorhergehenden Ansprüche, **dadurch gekennzeichnet, daß** es in einem mobilen Telefonsystem angewendet wird.

**Claims**

1. Method for correlation of time-discrete signal sections, with a predetermined signal section being determined in a signal by the correlation process, in particular for a signal transmission system, with the signal being transmitted with the known signal section from a transmitter to a receiver, and the position of the known signal section in the signal being determined in the receiver by the correlation between the received signal and the known signal section, **characterized in that**

the known signal section is stored as a hierarchical sequence subject to interference, with this sequence being the sum of a hierarchical sequence and of an error sequence; and
the correlation being formed as the sum of a correlation between the received signal and the stored hierarchical sequence, and a correlation between the signal and the stored error sequence.

2. Method according to Claim 1, **characterized in that** the hierarchical sequence $\underline{\tilde{h}}$ that is subject to interference can be represented as follows by the hierarchical sequence $\underline{h}$ and the error sequence $\underline{h}_e$:

$$\tilde{h}(k) = h(k) + h_e(k), \quad k = 0, \ldots, m-1$$

where $m$ is a natural number and denotes the length of the sequences $\underline{\tilde{h}}$, $\underline{h}$ and $\underline{h}_e$, and where the elements in the sequences $\underline{\tilde{h}}$ and $\underline{h}$ originate from the range of values $\{-\alpha, +\alpha)$, and the elements of he originate from the range of values $\{-2\alpha, 0, +2\alpha\}$. $\alpha$ in this case represents any desired real or complex number.

3. Method according to Claim 2, **characterized in that** the correlation $v(k)$ of $\underline{\tilde{h}}$ with the signal $s(k)$ is described by:

$$v(k) = \sum_{j=0}^{m-1} \tilde{h}(j) \cdot s(k+j) = \sum_{j=0}^{m-1} [\, h(j) + h_e(j)\,] \cdot s(k+j)$$

$$= \underbrace{\sum_{j=0}^{m-1} h(j) \cdot s(k+j)}_{u(k) :=} + \underbrace{\sum_{j=0}^{m-1} h_e(j) \cdot s(k+j)}_{u_e(k) :=}$$

where $u(k)$ is the correlation between the signal $s(k)$ and the stored hierarchical signals, and $u_e(k)$ is the correlation between the signal $s(k)$ and the stored error sequence.

4. Method according to Claim 1, 2 or 3, **characterized in that** the breakdown into the sum of a hierarchical sequence and of an error sequence is carried out in such a way that the error sequence contains as few elements that are not zero as possible.

5. Method according to one of the preceding claims, **characterized in that** the method is used in a mobile telephone system.

**Revendications**

1. Procédé de corrélation de sections de signaux à valeurs discrètes en temps, selon lequel la corrélation détermine un segment de signal prédéterminé dans un signal, en particulier pour un système de transmission de signaux, le signal ayant le segment de signal connu est envoyé d'un émetteur à un récepteur et la position du segment de signal connu est calculé dans le récepteur par la corrélation entre le signal reçu et le segment de signal connu, **caractérisé en ce que**
le segment de signal connu est archivé comme séquence hiérarchique perturbée, qui est la somme d'une séquence hiérarchique et d'une séquence erronée, et
la corrélation est formée en tant que somme d'une corrélation entre le signal reçu et la séquence hiérarchique archivée et d'une corrélation entre le signal et la séquence erronée archivée.

2. Procédé selon la revendication 1,
**caractérisé en ce que**
la séquence hiérarchique perturbée $\underline{\tilde{h}}$ peut être représentée de la manière suivante par la séquence hiérarchique

$\underline{h}$ et la séquence erronée $\underline{h}_e$ :

$$\tilde{h}(k) = h(k) + h_e(k), \quad k = 0, \ldots, m-1$$

où m est un nombre naturel et désigne la longueur des séquences $\underline{\tilde{h}}$, $\underline{h}$ et $\underline{h}_e$ et les éléments des séquences $\underline{\tilde{h}}$ et $\underline{h}$ sont constitués du stock de valeurs $\{\alpha, +\alpha\}$ et les éléments de $\underline{h}_e$ sont constitués du stock de valeurs $\{-2\alpha, 0, +2\alpha\}$, $\alpha$ représentant un nombre réel ou complexe quelconque.

3. Procédé selon la revendication 2,
**caractérisé en ce que**
la corrélation $\nu(k)$ de $\underline{\tilde{h}}$ avec le signal $s(k)$ est définie par :

$$\nu(k) = \sum_{j=0}^{m-1} \tilde{h}(j) \cdot s(k+j) = \sum_{j=0}^{m-1} [\, h(j) + h_e(j)\,] \cdot s(k+j)$$

$$= \underbrace{\sum_{j=0}^{m-1} h(j) \cdot s(k+j)}_{u(k) :=} + \underbrace{\sum_{j=0}^{m-1} h_e(j) \cdot s(k+j)}_{u_e(k) :=}$$

où u(k) est la corrélation entre le signal s(k) et la séquence hiérarchique archivée et $u_e(k)$ est la corrélation entre le signal $s(k)$ et la séquence erronée archivée.

4. Procédé selon la revendication 1, 2 ou 3,
**caractérisé en ce que**
la décomposition en la somme d'une séquence hiérarchique et d'une séquence erronée est effectuée de manière que la séquence erronée contient des éléments aussi peu différents de zéro que possible.

5. Procédé selon l'une quelconque des revendications précédentes,
**caractérisé en ce qu'**
il est utilisé dans un système de téléphone mobile.

EP 1 230 742 B1

TK1

TK2

| s(0) | s(1) | s(2) | s(3) | $\cdots$ |

$v_1(0)$ | $v_1(1)$ | $v_1(2)$ | $v_1(3)$ | $\cdots$

v(0) | v(1) | v(2) | $\cdots$

-2

Fig. 1

EP 1 230 742 B1

TK1

TK2

| s(0) | s(1) | s(2) | s(3) | ... |

+ + − +

| $v_1(0)$ | $v_1(1)$ | $v_1(2)$ | $v_1(3)$ | ... |

+ − + +

| v(0) | v(1) | v(2) | ... |

Fig. 2